# EUROPEAN PATENT APPLICATION

(11) **EP 2 813 752 A1**
(43) Date of publication of application: **17.12.2014**
(21) Application number: 14172173.8
(22) Date of filing: 12.06.2014
(51) Int. Cl.: F21S 8/10, F21V 31/03

(54) **Vehicle lamp and lamp breather system**

(30) Priority: 12.06.2013 GB 201310418
(71) Applicant: Nissan Motor Manufacturing (UK) Ltd., Cranfield Bedfordshire MK43 0DB (GB)
(72) Inventor: Champaneri, Bhavesh, Cranfield, Bedfordshire MK430DB (GB)

(57) **Abstract**

A rotatable breather system (120) and a rotatable vehicle lamp (110) comprising a rotatable breather system (120) are described. The rotatable breather system (120) comprises a baffle (152) having first and second openings (158,158') that are arranged substantially on opposite sides of a breather hole (134), in use to allow liquid to drain from the baffle (152) under the influence of gravity through the first or second opening (158,158'), depending upon the orientation of the breather system (120). The rotatable breather system (120) and rotatable vehicle lamp (110) find particular use as a centrally mounted rear fog lamp in which a light source (116) is laterally displaced within the lamp housing (118) to one side of a median vertical plane of the lamp housing (118). The rotatable breather system (120) and lateral displacement of the light source (116) within the lamp housing (118) allow for the fog lamp to be rotatable by 180° to be centrally mountable on both left-hand drive and right-hand drive vehicles, while maintaining the requisite visibility of the illuminated surface even when the lamp is placed low on the vehicle bumper and a tow bar is present.

## Description

### Field of the Invention

The invention relates to a breather system for a vehicle lamp, and a vehicle lamp that is usable on both left-hand drive and right-hand drive vehicles, or on either side of a single vehicle.

### Background of the Invention

Manufacturing and fitting vehicle lamps for left-hand drive (LHD) versus right hand-drive (RHD) vehicles, or fitting vehicle lamps on the left or right side of a vehicle, often requires layout changes to the lamp and/or to the vehicle. Typically, when vehicle lamps are fitted, the vehicle lamp housing is received within a recessed portion of the vehicle's body or bumper having a shape and fittings mutually corresponding to the lamp housing. Layout considerations exist and the shape and positioning of a vehicle's lamps may change depending upon whether the vehicle is LHD or RHD, or whether the lamp is fitted towards the left or right side of the vehicle. Manufacturing and fitting vehicle lamps for both LHD and RHD vehicles or for the left or right of a vehicle therefore adds to part complexity, component cost, and difficulty of manufacturing and assembly of the lamp and/or vehicle.

It would be desirable to manufacture a single vehicle lamp that is usable for both LHD and RHD vehicles, or usable on either the left or right of a single vehicle, which does not require layout changes to be made to the lamp or to the vehicle depending upon the placement of the lamp.

Rear fog lamps, which are lamps used to make a vehicle more easily visible from the rear in dense fog, may be fitted either singly or in pairs. Particular layout considerations may be taken into account in the manufacture and fitting of fog lamps. For example, for Whole Vehicle Type Approval regulations, if a single rear fog lamp is used, the illuminated surface must be located either at the vehicle centre line (along the median longitudinal plane) or offset to the driver's side. Additionally, the fog lamp must meet specific photometric and geometric visibility requirements.

If a single rear fog lamp is to be used, mounting the lamp at the vehicle centre line may be desirable. This may not only maintain an aesthetically pleasing appearance of the vehicle by making the vehicle look symmetrical, but also avoids the layout changes to the vehicle which would otherwise be required when offsetting the lamp to the driver's side of the vehicle, which differs by country according to LHD or RHD requirements.

However, the rear of the vehicle provides little design freedom for mounting of the lamp, as there are many different parts and components that are also present and may obstruct mounting. When mounting a single rear fog lamp at the vehicle's centre line, due to restrictions in layout configurations of some vehicles, it may be possible only to fix the lamp in the lower portion of the vehicle's rear bumper.

For normal driving conditions this may be acceptable. However, this can present a problem when a tow bar (tow hitch) for a caravan or a trailer is fitted. When the caravan or trailer is unhitched but the tow bar is present, the vehicle may not be considered road legal because the tow bar (tow hitch) obscures the visibility of the rear fog lamp.

Therefore, when a rear fog lamp is mounted centrally and a tow bar is also mounted, a problem may exist with the visibility of the fog lamp.

In such cases, for the vehicle to be considered road legal, either 1) the tow bar must be removed after each use, which is time consuming and inconvenient for the driver, or 2) an easily removable detachable/foldable tow bar must be fitted. Such detachable/foldable tow bars are complex and expensive to manufacture. The additional expense of detachable/foldable tow bars may have a detrimental effect on sales of vehicles for which addition of a tow ball is a popular option.

Therefore, it would be desirable to be able to manufacture a rear fog lamp that could be mounted at the vehicle centre line while maintaining the visibility of the lamp, even in the presence of a tow bar (tow hitch).

It is against this background that the present invention has been devised.

### Summary of the Invention

Generally, the present invention addresses the problem of manufacturing a single vehicle lamp that is usable for both LHD and RHD vehicles (or usable on either the left or right of a single vehicle) and which does not require specific layout changes to be made to the lamp or to the vehicle. The present invention broadly resides in a vehicle lamp that is rotatable by 180° to be mountable in two configurations. Depending upon the configuration in which the lamp is mounted, the lamp may be suitable for either a LHD or an RHD vehicle or in positions on either the left or right of the same vehicle irrespective of whether it is a LHD or RHD vehicle. In a specific embodiment, the present invention addresses the problem of obscured visibility of a centrally mounted rear fog lamp when a tow bar is fitted, while avoiding the need for specific layout changes to the vehicle that might otherwise be required to offset the lamp to the driver's side.

Vehicle lamps such as fog lamps require a breather system on the lamp housing to prevent the build up of moisture within the lamp and to promote air and vapour flow, which is vital to reduce the effect of condensation. Condensation is to be avoided due to the detrimental effect it can have, for example, on optical performance. However, producing a rotatable vehicle lamp presents an additional problem, as a conventional breather system will not be effective unless used in a specific right-way-up orientation. In a typical conventional breather system for a conventional vehicle lamp, a single water labyrinth drain hole is located at the lowest portion of the lamp. If this conventional lamp is then rotated by 180°, water will be able to enter the lamp fitting, but will be unable to drain. In particular, water (or other liquids) mayl have a direct path into the breather.

The present invention relates to a rotatable breather system that protects a breather hole from the ingress of liquid by directing liquid away from the breather hole. The rotatable breather system comprises a baffle structure that creates a tortuous or labyrinth path for directing liquid away from the breather hole, while allowing liquid to escape out of the baffle structure away from the breather hole. The baffle structure may include two outlets arranged substantially on opposite sides of the breather hole, which allow liquid to drain from either side of the breather system under the influence of gravity, depending upon the orientation of the breather system. The rotatable breather system therefore makes possible a rotatable vehicle lamp that may be mounted in either of two configurations and can operate without any reduction in optical performance due to condensation.

Thus, from a first aspect, the present invention resides in a rotatable breather system for a vehicle lamp, the rotatable breather system comprising:
- a breather hole defining an aperture through a wall of the lamp housing to allow air flow between the interior and exterior of the lamp housing, the wall having a first, external surface;
- a cap mountable over the breather hole and comprising a covering surface, in use, to allow air flow through the breather hole and to substantially prevent flow of liquid from the exterior to the interior of the lamp housing; and
- a baffle on the first surface of the lamp housing to direct liquid away from the breather hole, the baffle comprising one or more ribs upstanding from the first surface of the lamp housing, the one or more upstanding ribs arranged radially out from the breather hole and defining a tortuous path with at least one wall to prevent direct flow of liquid towards the breather hole from the radially outer side of the baffle, the one or more ribs further defining at least a first and second opening through the baffle, the first and second opening being arranged substantially on opposite sides of the breather hole in use to allow liquid to drain from the baffle under the influence of gravity through the first or second opening, depending upon the orientation of the breather system.

Preferably, the rotatable breather system is integral to the first, external surface of the lamp housing, which is most preferably the external rear surface of the lamp housing.

The periphery of the breather hole may be defined by at least one breather hole wall upstanding from the first surface of the lamp housing. Suitably, the breather hole wall encircles the breather hole. The lamp housing, the baffle and the breather hole wall may all be formed from any suitable material, but are typically made of plastics material, particularly an injection-moulded plastics material. The plastics material may be a polypropylene (PP), an acrylonitrile butadiene styrene (ABS), a polycarbonate (PC), a polycarbonate/acrylonitrile butadiene styrene (PC/ABS) or any other suitable plastics material.

Preferably the ribs of the baffle upstand from the first surface of the lamp housing by a greater amount than the breather hole wall and/or the cap over the breather hole wall, to further improve the directing of liquid away from the breather hole. However, the one or more ribs may upstand from the external surface of the lamp by the same or by a lesser amount than the breather hole wall and/or cap.

In some embodiments, the cap mountable over the breather hole may be mounted on the breather hole wall or may be directly attached to the breather hole. The cap may have any suitable shape, and is suitably adapted to allow air flow through the breather hole (in both directions) while substantially preventing the flow of liquid from the exterior to the interior of the breather hole. For example, in some embodiments the cap may include an attachment means for attaching to the breather hole or to a breather hole wall, such as without limitation, a screw fitting, a push-fitting, or a clip-fitting. Any suitable attachment system may be used.

To allow ventilation between the interior and exterior of the lamp via the breather hole, the breather hole, the breather hole wall, or the breather hole cap suitably comprises a ventilation structure. In some embodiments, the breather hole or breather hole wall may fit imperfectly with the cap thus allowing air flow and ventilation between the exterior and interior of the breather between the cap and the breather hole or breather hole wall. One or more of the breather hole, the breather hole wall, or the breather hole cap may also contain grooves, channels, bores, or other suitable surface features which allow ventilation through the breather hole. In some embodiments, the surface structures, such as grooves or channels in the surface of the breather hole or breather hole wall may fit imperfectly with the cap, the grooves or channels thus allowing air flow and ventilation between the exterior and interior of the breather between the cap and the breather hole or breather hole wall. Alternatively, the cap, breather hole, or breather hole wall may be fitted with a membrane to allow exchange of gas while substantially preventing the ingress of liquid into the interior of the lamp housing.

The cap may be made of any suitable material and is typically made of a plastics material, particularly an injection-moulded plastics material, or a rubber material. The cap may also be made of multiple materials, such as a plastics material and a rubber material, and may comprise, for instance, a top surface that is more air permeable than the other surfaces of the cap. The plastics material may be a polypropylene (PP), an acrylonitrile butadiene styrene (ABS), a polycarbonate (PC), a polycarbonate/acrylonitrile butadiene styrene (PC/ABS) or any other suitable plastics material. The rubber material may be a natural rubber material or a synthetic rubber material, such as a styrene butadiene rubber (SBR), or any other suitable rubber material.

The baffle is designed as a two-way hood and labyrinthine structure that operates in either orientation to prevent / minimise the flow of liquid into the breather hole, and to direct the flow of any liquid that may enter the baffle structure away from the breather hole. The baffle comprises one or more ribs upstanding from an external surface of the lamp housing. The one or more upstanding ribs are arranged radially out from the breather hole and define a tortuous (or labyrinth) path for fluid around the breather hole, such that there is suitably at least one wall of the baffle structure to prevent the direct flow of liquid towards the breather hole from a position on the surface of the lamp housing radially outside of the baffle. The one or more ribs further define at least a first and second opening through the baffle, the first and second opening being arranged substantially on opposite sides of the breather hole, in use, to allow liquid to drain from the baffle under the influence of gravity. The first and second openings may, in some embodiments, be arranged directly opposite one another on a first and second side of the breather hole. The first and second opening are preferably arranged such that, in use, under the influence of gravity, liquid entering the baffle from a position vertically above the breather hole may flow from the first opening to and through the second opening, or from the second opening to and through the first opening, depending upon the orientation of the breather system. Thus, in normal use of the lamp, the openings in the baffle structure may be arranged vertically above and vertically below the breather hole; preferably at the uppermost and lowermost extremes of the baffle.

The ribs may be of any suitable shape provided they are arranged around the breather hole to direct liquids generally away from, rather than directly towards, the breather hole. There may be one or more (e.g. 1, 2, 3, 4 or more) curved or linear ribs, or there may be a combination of curved and linear ribs. In some embodiments the baffle comprises at least a first and a second generally C-shaped rib. Preferably there are two ribs. The first and second generally C-shaped ribs may preferably be arranged such that the concave side of the 'C's generally oppose each other. Further, the ribs are preferably laterally offset from one another on the first surface about the breather hole and nested, i.e. such that the ends of the ribs overlap in one plane. Suitably, the nested ends of the first and second generally C-shaped ribs define the first and second openings therebetween. Preferably, by the C-shaped ribs being laterally offset about the breather hole and nested, it is meant that the ends of the ribs overlap in a vertical plane, in use, such that a median cross-sectional plane perpendicular to the first surface cuts through the second end of the first rib, the first end of the second rib, the breather hole, the first end of the first rib and the second end of the second rib. In use, suitably the vertical overlap of the second end of the first rib over the first end of the second rib (and the second end of the second rib over the first end of the first rib, in an alternative configuration, depending upon the orientation of the breather system) forms a staggered opening into the baffle structure, which restricts, hinders or prevents liquids (especially water) from flowing in a substantially vertical direction into the baffle (and thus into the breather system) under the influence of gravity. Preferably, the ribs are arranged such that any liquid entering the uppermost opening in the baffle may come into contact with a rib wall and flow, under gravity, around the ribs walls and, thus, be deflected away from the breather hole.

Each generally C-shaped rib may comprise one or more linear or curved subsections. Alternatively, the C-shaped rib may be curved along substantially its full length (i.e. without linear subsections). In a preferred embodiment, the generally C-shaped rib may comprise three or more subsections. The subsections may each be generally linear and arranged at obtuse angles 'c' to form the concave portion of the C-shaped rib. The obtuse angles 'c' is greater than 90° and less than 180°. Each generally C-shaped rib may further comprise a first end or first end portion and a second end or second end portion. The first and second end portions may be linear or non-linear. Where the ribs are laterally off-set from each other about the breather hole, the first end portion may be radially more proximate to the breather hole and the second end portion may be radially more distant from the breather hole. In such arrangements, according to a preferred embodiment the angle 'd' subtended between the first end portion and the adjacent generally linear subsection may be greater than 180° and less than 360°, and the angle 'e' subtended between the second end portion and the adjacent generally linear subsection may be greater than 90° and less than 180°. In use, the radially more distant second end portions form a flatter (i.e. more horizontal) surface / wall with a smaller angle from the adjacent subsection. This flatter surface with a smaller angle serves as a hood which extends over the first end portion of the other rib to hinder or prevent water from flowing into the inside of the baffle structure towards the breather hole. Meanwhile the radially more proximate first end portions form a steeper (i.e. more vertical) surface / wall with a larger angle from the adjacent linear subsection. The larger angle encourages water to be directed away from the inside of the baffle structure and breather hole, such that gravity causes water that has entered the baffle to flow around the baffle and out of the lower opening; whereas water is also prevented from entering the baffle structure and flows around the outer walls of the ribs.

The one or more ribs may each comprise a base integral to or abutting the first surface of the lamp housing and a tip further from the surface of the lamp housing. The ribs may taper from the base toward the tip. The ribs may thus define a generally semi-circular, oblong, trapezoidal or triangular cross section. In some embodiments, the ribs may comprise at least a first and second rib wall on opposite sides of the rib. The first and second rib walls preferably taper from the base toward the tip, such that the rib defines a substantially triangular cross section. The first rib wall may be an internal rib wall that is radially more proximate to the breather hole, and the second rib wall may be an external rib wall that is radially more distant from the breather hole.

In a preferred arrangement, the angle 'a' subtended between the plane of the first surface of the lamp housing through the base of the rib and the second rib wall may preferably be less than the angle 'b' subtended between the plane of the first surface of the lamp housing through the base of the rib and the first rib wall. Angle 'a' and angle 'b' may both preferably be greater than 90°. The shallower angle 'a' subtended by the second rib wall that is radially more distant from the breather hole helps to protect the breather hole and breather cap from liquid on the external surface of the lamp housing, and in use promotes the flow of liquid outward from the face of the baffle instead of downward into and through the baffle. The more open angle 'b' subtended by the first rib wall that is radially more proximate to the breather hole encourages water that has entered the baffle to drain downward and through the baffle in use, which helps to direct the flow of liquid away from the breather hole and breather cap area.

From a second aspect, the present invention resides in a vehicle lamp comprising a light source, a lamp housing with at least one translucent or transparent surface (i.e. the illuminating surface) for transmitting light emitted by the light source, and the rotatable breather system. Suitably, the rotatable breather system is defined according to the first aspect of the invention. The vehicle lamp is suitably mountable to a vehicle in two configurations. In particular, the vehicle lamp may be rotatable by 180°, and mountable to the vehicle in either orientation. Preferably, the vehicle lamp is rotatable by 180° and mountable on a longitudinal axis of the vehicle. Preferably the vehicle lamp is rotatable by 180° about a central axis running from the front external surface to the rear external surface of the lamp housing and mountable to the vehicle in either orientation. Preferably, in use, the lamp is mounted substantially vertically, more preferably in use the median vertical plane of the lamp coincides with a longitudinal plane in the vehicle, i.e. the lamp is mounted substantially vertically in/on the front or rear of the vehicle. In a particularly preferred embodiment, in use on a vehicle, the central axis running from the front external surface to the rear external surface of the lamp housing coincides with a longitudinal axis on the vehicle, more preferably a longitudinal axis coinciding with the median longitudinal plane of the vehicle. Thus the vehicle lamp is most preferably adapted to be mounted in the centre of the vehicle, particularly on the vehicle centre line.

The vehicle lamp may thus be mounted in the centre of the bumper of the vehicle, most preferably in the centre of the rear bumper of the vehicle. The vehicle lamp may be mounted in a recessed portion of the bumper having a shape corresponding to the lamp housing and adapted to receive the lamp housing.

The lamp housing may be mounted to the vehicle by any suitable means, and is typically mounted to the vehicle by spring clip structures, which extend symmetrically on either side of the lamp housing, thus allowing the lamp housing to be mounted in either orientation in an appropriate recess in the vehicle. The spring clip structures may clip to corresponding structures in a recessed portion of the bumper to allow the lamp to be mounted. Any suitable fixing means may be used to mount the lamp in either orientation. The lamp may be fixed by means such as screws, fixing clips, and/or other suitable fixing means.

The light source may be any suitable light source, such as an incandescent bulb, a halogen bulb or an LED. Preferably, the lamp is a fog lamp.

The symmetry of the lamp housing and the light source within the lamp housing from top to bottom about a median lateral plane of the lamp housing (rotational symmetry), combined with suitable mounting recesses that are also symmetric in the plane of the vehicle, allows for the lamp to be rotatable by 180° and mountable in two configurations. By symmetric in the plane of the vehicle it is meant that the opposing sides (e.g. left and right and/or top and bottom) of a particular recess are identical, for a single centrally mounted lamp to be mounted in either configuration on a LHD or RHD vehicle. Symmetric in the plane of a vehicle may also mean that the left and right sides and/or top and bottom sides of a particular recess are mirror images. For left and right sides, the attachment fittings of the vehicle should preferably be mirror across the median longitudinal plane of the vehicle with another corresponding recess on the opposite lateral side of the vehicle, such that a single rotatable lamp is usable in two configurations on either lateral side of the same vehicle. By median lateral plane is meant the central cross sectional plane running in a left-right direction when the lamp is in use.

Preferably the vehicle lamp is for mounting across the *median* (i.e. central) longitudinal plane of the vehicle. In such an embodiment, the light source is preferably laterally displaced within the lamp housing to one side of a median vertical plane of the lamp housing. By median vertical plane is meant the central cross sectional plane running in an up-down direction when the lamp is in use. For a single centrally-mounted lamp, most preferably the median vertical plane of the lamp housing will coincide with the median longitudinal plane of the vehicle in use. In this way, a centrally mounted tow bar, for example, will not obscure the light source of the lamp, in use.

The rotatable lamp and breather system of the invention find particular use in an embodiment of a centrally mounted rear fog lamp, which is rotatable by 180° to be mountable on both left-hand drive and right-hand drive vehicles, since the light source remains visible and road legal even when placed low on the vehicle bumper and after a centrally mounted tow bar has been fitted. As with other embodiments above, rotation may occur about a central axis running from the front external surface to the rear external surface of the lamp housing. In this particular embodiment, in use, the central axis running from the front external surface to the rear external surface of the lamp housing may be coincident with the median longitudinal plane on the vehicle, such that the vehicle lamp is mounted across the median longitudinal plane.

From a third aspect, the present invention resides in a rotatable vehicle lamp comprising a light source, a lamp housing with at least one translucent or transparent surface for transmitting light emitted by the light source, and a rotatable breather system, the rotatable breather system comprising:
- a breather hole defining an aperture through a wall of the lamp housing to allow air flow between the interior and exterior of the lamp housing, the wall having a first, external surface;
- a cap mountable over the breather hole and comprising a covering surface, in use, to allow air flow through the breather hole and to substantially prevent flow of liquid from the exterior to the interior of the lamp housing; and
- a baffle on the first surface of the lamp housing to direct liquid away from the breather hole, the baffle comprising one or more ribs upstanding from the first surface of the lamp housing, the one or more upstanding ribs arranged radially out from the breather hole and defining a tortuous path with at least one wall to prevent direct flow of liquid towards the breather hole;
and wherein (a) the one or more ribs further define at least a first and second opening through the baffle and the first and second openings are arranged substantially on opposite sides of the breather hole, in use, to allow liquid to drain from the baffle under the influence of gravity through the first or second opening, depending upon the orientation of the breather system; and (b) the light source is laterally displaced within the lamp housing to one side of a median vertical plane of the lamp housing.

According to a fourth aspect, the invention resides in a vehicle fitted with a lamp according to the second or third aspects of the invention.

All optional and preferred features mentioned with reference to the first two aspects of the invention may also be incorporated into the third and fourth aspects of the invention.

### Brief Description of Drawings

In order that the invention may be more readily understood, reference will now be made, by way of example, to the accompanying drawings, in which:
Figure 1 is a top plan view of a fog lamp assembly and breather system according to an embodiment of the present invention centrally mounted on a right-hand drive vehicle with a tow bar fitted.
Figure 2 is a rear view of the lamp assembly and tow bar of Figure 1.
Figure 3: (A) a three-dimensional view of a rotatable breather system according to an embodiment of the present invention; (B) a plan view of the rotatable breather system of Figure 3A.
Figure 4 shows a cross section of the rotatable breather system of Figure 3.
Figures 5: (A) rear view of a rotatable fog lamp assembly and breather system according to an embodiment of the invention illustrating that it can be rotated by 180° and that it looks the same in either orientation; (B) the fog lamp assembly of (A) from above, as it would be arranged centrally mounted on a right-hand drive vehicle; (C) the fog lamp assembly of (A) from above, as it would be arranged centrally mounted on a left-hand drive vehicle.

### Detailed Description of the Invention

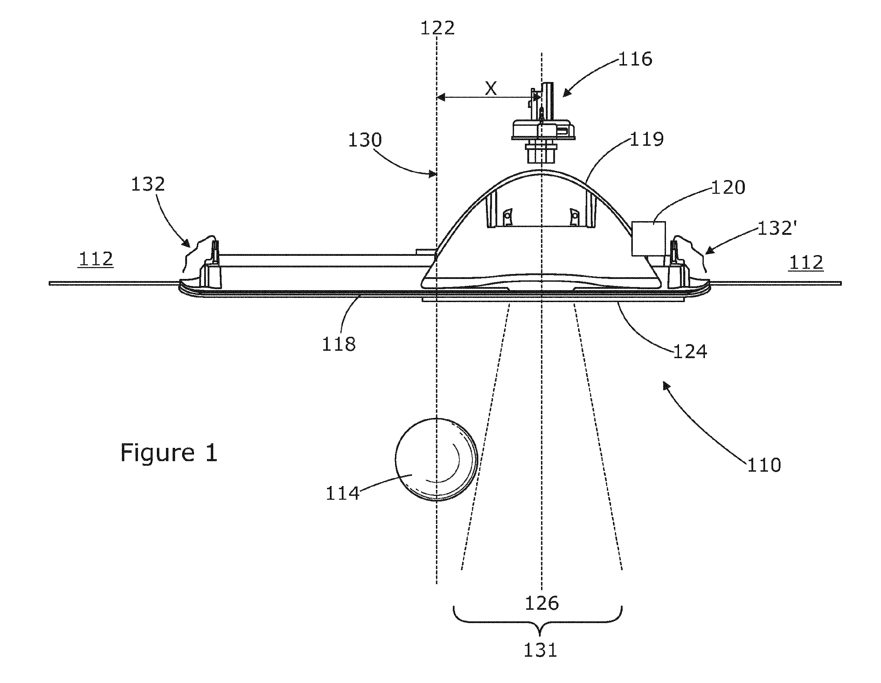

Referring firstly to Figure 1, a rotatable vehicle lamp 110 is shown mounted in a recess in the rear bumper 112 of a right-hand drive vehicle, a towball 114 is also shown in place, centrally mounted behind the vehicle bumper 112. The rotatable vehicle lamp 110 comprises: a light source 116 (in this case an incandescent bulb), a lamp housing 118 having a light source compartment 119, and a rotatable breather system 120. While in this embodiment the breather system is shown mounted to the right-hand rear external surface of the light source compartment 119 of the lamp housing 118, the skilled person will appreciate that is could alternatively be mounted at any appropriate position on the lamp housing 118, provided that it can function to ventilate the light source compartment. The breather system is generally mounted, in use, to a vertical external surface of the lamp housing. The light source 116 is laterally displaced within the lamp housing 118 to one side of a median vertical plane 122 of the lamp housing 118. Due to the lateral displacement x of the light source 116 within the housing 118, the illuminated surface 124 has its centre 126 offset by a distance x from the vehicle centre line 130 passing through the towbar 114 towards the right-hand side (i.e. the driver's side of a right-hand drive vehicle). If the light source 116 were not laterally displaced by a distance x within the housing 118, the towball 114 would obscure the visibility of the light source 116 and the vehicle may not be considered road legal. Displacement of the light source 116 by a distance x within the lamp housing 118 from the median vertical plane 122 and the vehicle centre line 130 towards the driver's side allows for a regulation visibility area 131 about the centre 126 of the illuminated surface 124 to be met. Thus the towball 114 does not obscure the regulation visibility area 131, and the vehicle is considered to be road legal. The symmetrical nature and positioning of spring clips 132, 132' allow for the rotatable vehicle lamp 110 to be mounted in either orientation.

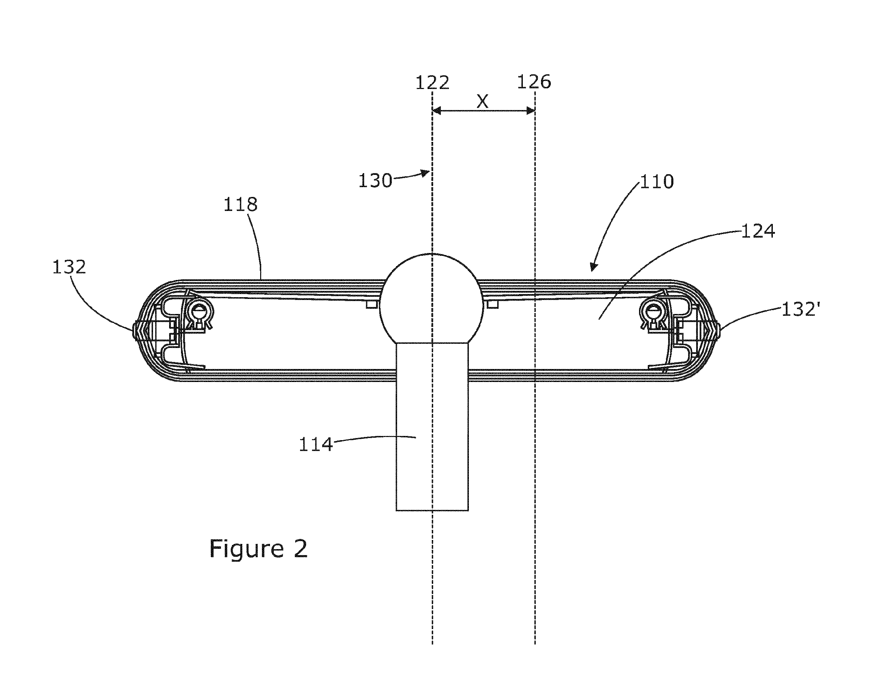

Figure 2 is a rear view of the rotatable vehicle lamp 110 and towball 114 of Figure 1. In this figure the lateral (right-hand side) displacement x of the light source (not visible in this view) represented by centre line 126 relative to the median vertical plane 122 and centre line of the vehicle 130 is clearly illustrated.

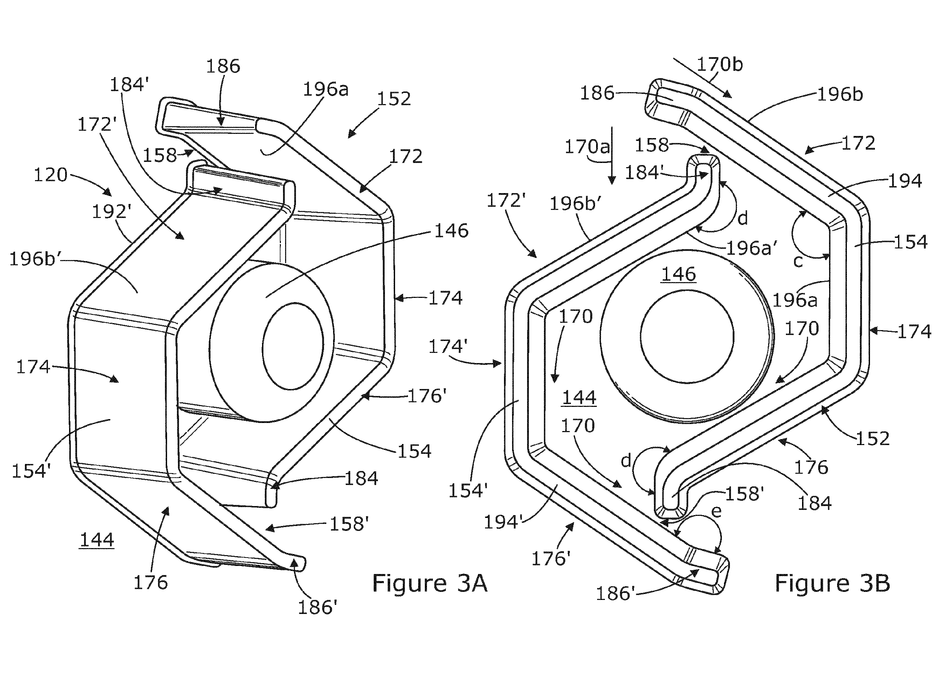

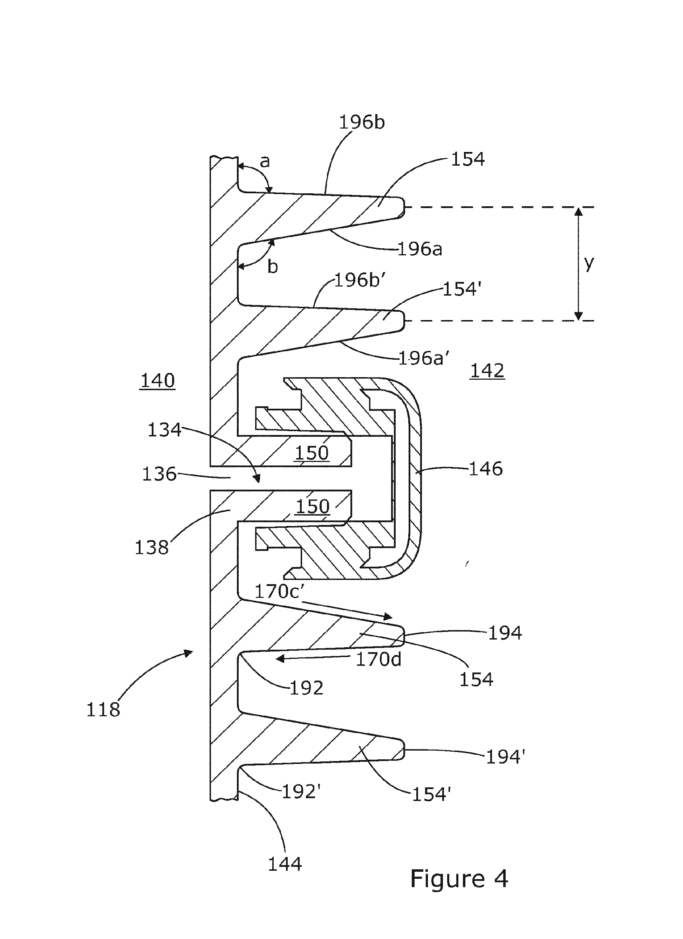

A rotatable breather system according to an embodiment of the invention is illustrated by reference to Figures 3A, 3B and 4, which respectively show a three-dimensional perspective view, a plan view and a median cross-section of the breather system 120. The rotatable breather system 120 comprises a breather hole 134 defining an aperture 136 through a wall 138 of the lamp housing 118 to allow air flow between the interior 140 and exterior 142 of the lamp housing 118. The wall 138 of the lamp housing 118 has a first, external surface 144 with the baffle 152 of the breather system 120 arranged thereon. A circular breather hole wall 150 upstands from the external surface 144 of the lamp housing 118 and defines the peripheral of the breather hole 134 while extending the breather hole 134 away from the external surface 144.

A cap 146 is mounted to the breather hole wall 150, so as to cover the breather hole 134, in use, to allow air flow through the breather hole 134 and to substantially prevent flow of liquid from the exterior 142 to the interior 140 of the lamp housing 118. In this embodiment the cap 146 is secured to the breather hole wall 150 using a push fit.

However, other suitable engagement systems, such as screw-fit, and clip systems may alternatively be used. The cap 146 engages with the breather hole walls 150 in a manner which allows air to exchange between the interior 140 and exterior 142 of the lamp housing 118 via the breather hole 134, while substantially preventing flow of liquid from the exterior 142 to the interior 140 of the lamp housing 118.

The baffle 152 of the rotatable breather system 120 is arranged to direct liquid on the external surface 144 of the lamp housing 118 away from the breather hole (134, which is not visible in Figures 3A and 3B, as it is covered by cap 146). In the depicted embodiment, the baffle 152 comprises two ribs 154, 154' upstanding from the first surface 144 of the lamp housing 118. The ribs 154, 154' are arranged radially out from the breather hole 134 and define a tortuous flow path for liquids with at least one rib arranged so as to prevent the flow of liquid from the radial outer side of the baffle 152 directly (i.e. linearly) towards the breather hole 134 (as clearly illustrated in Figures 3A and 3B). The ribs 154, 154' further are arranged to define a first and a second opening 158, 158' through the baffle 152. In this embodiment, the first and second openings 158, 158' are arranged substantially on opposite sides of the breather hole 134, in use, to allow liquid to drain from the baffle 152 under the influence of gravity through the first or second opening 158, 158', depending upon the orientation of the breather system 120. When mounted on a vehicle, the lamp housing 118 and breather system 120 is arranged such that that openings 158, 158' are substantially vertically aligned, one above the other.

The ribs 154, 154' are, according to the depicted embodiment, generally C-shaped (as viewed from above - see Figure 3B). The first 154 and second generally C-shaped rib 154' are oriented so as to generally oppose one another so that the concave portions of the ribs 154, 154' encircle the breather hole 134, and are laterally offset by an amount 'y' in a vertical direction on the first surface 144 about the breather hole 134. In this embodiment, the ribs 154, 154' are also nested within one another (as shown most clearly in Figure 3B) so as to enclose the breather hole 134. In this arrangement this ribs 154, 154' of the baffle 152 have a 180° rotational symmetry. By the C-shaped ribs 154, 154' being laterally offset about the breather hole 134 and nested, it is meant that the ends of the ribs overlap vertically in use, such that a median cross-sectional plane perpendicular to the first surface 144 (Figure 4) cuts through a portion of the first rib 154, a portion of the second rib 154', the breather hole 134, and again through a portion of the first rib 154and a portion of the second rib 154'.

According to the depicted embodiment, each generally C-shaped rib 154, 154' comprises three subsections 172, 174, 176; 172', 174', 176'. The subsections are generally linear and are joined (172-174-176; 172'-174'-176') together and arranged at obtuse angles 'c' to form the concave portion of the ribs 154, 154'. The obtuse angles 'c' are greater than 90° and less than 180°. In this embodiment, each generally C-shaped rib 154, 154' further comprises a first end portion 184, 184' which is the end portion radially more proximate to the breather hole 134, and a second end portion 186, 186' which is the end portion radially more distant from the breather hole 134. In the arrangement as depicted, the angle 'd' subtended between the first end portion 184, 184' and the adjacent generally linear subsection 172, 172' respectively, is greater than 180° and less than 360°, and the angle 'e' subtended between the second end portion 186, 186' and the adjacent generally linear subsection 176, 176' respectively, is greater than 90° and less than 180°. In use, the radially more distant second end portions 186, 186' therefore form a flatter, more horizontal section / surface when compared to the stepper, more vertical section / surface of the more proximate first end portions 184, 184'. Thus, when the baffle is vertically arranged in use, the vertically uppermost second end portion 186 of the first rib 154 (see Figure 3B) serves as a hood overhanging the first end section 184' of the second rib 154' to direct water 170a, 170b away from the uppermost baffle opening 158 that is defined between the second end portion 186 of the first rib 154 and the first end portion 184' of the second rib 154'. Meanwhile the radially more proximate first end portions 184' of the second rib 154' forms, in this orientation, a steeper more vertical wall to help prevent the ingress of fluid into the opening 158. When the breather system 120 is rotated by 180° it is clear that the second end of the baffle 152 (see end sections 186' and 184 of the respective second 154' and first 154 ribs) functions similarly to that described above for the first orientation.. Water that has entered the baffle structure 152 flows 170 around the inner walls 196a, 196a' of the ribs 154, 154' away from the breather hole 134 and out through the lowermost opening in the baffle 158', which is defined between the first end portion 184 of the first rib 154 and the second end portion 186' of the second rib 154'.

As shown most clearly in Figure 4, the ribs 154, 154' each has a base 192, 192' integral to or abutting the first surface 144 of the lamp housing 118, and a tip 194, 194'. The side walls 196a 196b; 196a'. 196b' of the ribs 154, 154' taper are angled so that the ribs 154, 154' taper from their base 192, 192' to their tip 194, 194' and the ribs 154, 154' have a generally triangular cross section (as depicted in Figure 4). For convenience, the side walls 196a, 196a' of each rib radially closest to the breather hole 134 (i.e. the inner / internal walls of the baffle 152) are termed herein the 'first' rib walls; whereas the side walls 196b, 196b' of each rib radially furthest from the breather hole 134 (i.e. the outer / external walls of the baffle 152) are termed herein the 'second' rib walls..

In the depicted embodiment, the generally triangular cross-section of the ribs 154, 154' is shaped so as to improve the drainage of liquid away from the breather hole 134. Accordingly, in this embodiment, the angle 'a' subtended between the plane of the first surface 144 of the lamp housing 118 through the base 192, 192' of the rib 154, 154' and the second rib wall 198, 198' is less than the angle 'b' subtended between the plane of the first surface 144 of the lamp housing 118 through the base of the rib 192, 192' and the first rib wall 196, 196'. In the depicted arrangement, angle 'a' and angle 'b' are both greater than 90° so as to create the generally triangular cross-section of the rib 154, 154'. However, the shallower angle 'a' subtended by the second rib wall 196b, 196b' (that is radially more distant from the breather hole 134) helps protect the breather hole 134 and breather cap 146 from water, and in use promotes the flow of liquid 170c outward from the face of the baffle 152 instead of downward into and through the baffle 152; whereas the more open angle 'b' subtended by the first rib wall 196a, 196a' (that is radially more proximate to the breather hole) promotes the flow of liquid 170d that has entered the baffle 152 away from the breather hole 134 and breather cap 148 area towards the lowermost opening 158'.

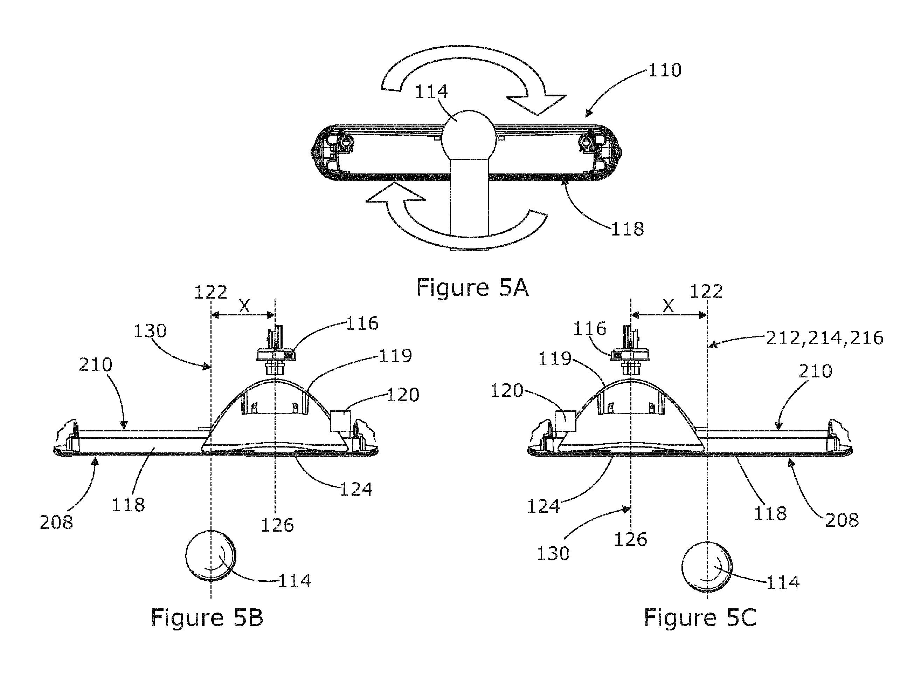

Figures 5A, 5B and -5C show a rotatable fog lamp according to a particular embodiment of the invention. As described in relation to Figure 1, the rotatable fog lamp 110 comprises a lamp housing 118, a light source 116 (in this case an incandescent bulb) mountable inside the light source compartment 119, and a rotatable breather system 120. The light source 116 is laterally displaced within the lamp housing 118 to one side of a median vertical plane 122 of the lamp housing 118. Due to the lateral displacement x of the light source 116 within the housing 118, the illuminated surface 124 has its centre 126 offset by a distance x from the vehicle centre line 130 (which in this embodiment is coincident with the median vertical plane of the lamp housing 118) towards the driver's side - respectively the right-hand side as depicted in Figure 5B, and the left-hand side as depicted in Figure 5C. The rotatable lamp 110 and breather system 120 find particular use in this embodiment in a centrally mounted rear fog lamp, which is rotatable by 180° (as shown in Figure 5A) to be mountable on both right-hand drive and left-hand drive vehicles (Figures 5B and 5C, respectively), and remains visible and road legal even when placed low on the vehicle bumper (not shown) and after a tow bar 114 has been fitted.

Thus, in this embodiment the rotatable vehicle lamp 110 is rotatable by 180° about an axis running from the front external surface 208 to the rear external surface 210 of the lamp housing 118, which, in use, may coincide with a longitudinal plane of the vehicle to which it is mounted. In a fog lamp embodiment where the vehicle is only fitted with one fog lamp, the axis of rotation preferably coincides with the median longitudinal plane of the vehicle, such that the vehicle lamp 110 is mounted in the centre of the vehicle (suitablyu within the rear bumper). In this way, the illuminated surface 124 of the lamp 110 remains visible on the driver's side, even when a tow bar tow ball 114 is fitted.

The skilled person will understand that many variations are possible without departing from the inventive concept, which is defined by the appended claims. For example, the rotational symmetry of the breather system of the invention may allow vehicle lamps to be mounted on left and right hand sides of a vehicle, rather than across the centreline of the vehicle. While a fog lamp represents a preferred embodiment of the invention, the breather system may be utilised with all other types of vehicle lamp in which a breather system is desirable.

## Claims

1. A rotatable breather system (120) for a vehicle lamp (110), the rotatable breather system being integral to a lamp housing (118) and comprising:
- a breather hole (134) defining an aperture through a wall (138) of the lamp housing to allow air flow between the interior (140) and exterior (142) of the lamp housing, the wall having a first, external surface (144);
- a cap (146) mountable over the breather hole and comprising a covering surface, in use, to allow air flow through the breather hole and to substantially prevent flow of liquid from the exterior to the interior of the lamp housing; and
- a baffle (152) on the first surface of the lamp housing to direct liquid away from the breather hole, the baffle comprising one or more ribs (154) upstanding from the first surface of the lamp housing, the one or more upstanding ribs arranged radially out from the breather hole and defining a tortuous path with at least one wall to prevent direct flow of liquid towards the breather hole, the one or more ribs (154) further defining at least a first and second opening through the baffle, the first and second opening (158, 158') being arranged substantially on opposite sides of the breather hole in use to allow liquid to drain from the baffle under the influence of gravity through the first or second opening, depending upon the orientation of the breather system.

2. The rotatable breather system of claim 1, wherein the periphery of the breather hole is defined by at least one breather hole wall (150) upstanding from the first surface of the lamp housing.

3. The rotatable breather system of claim 1 or 2, wherein the one or more ribs (154) each comprise a base (192) integral to or abutting the first surface of the lamp housing and a tip (194), and the one or more ribs taper from the base toward the tip.

4. The rotatable breather system of any one of claims 1 to 3, wherein the one or more ribs (154) each comprise a base (192) integral to or abutting the first surface of the lamp housing, a tip (194) and at least a first and second rib wall, the first and second rib walls (196a, 196b) tapering from the base toward the tip, such that each rib defines a substantially triangular cross section.

5. The rotatable breather system of claim 4, wherein the first rib wall (196a) is an internal rib wall that is radially more proximate to the breather hole, and the second rib wall (196b) is an external rib wall that is radially more distant from the breather hole (134), and wherein the angle 'a' subtended between the plane of the first surface of the lamp housing through the base of the rib and the second rib wall is less than the angle 'b' subtended between the plane of the first surface of the lamp housing through the base of the rib and the first rib wall.

6. The rotatable breather system of any one of claims 1 to 5, wherein the one or more ribs comprise at least a first and a second generally C-shaped rib (154, 154'), the first and second generally C-shaped ribs being laterally offset from one another about the breather hole (134) and nested, such that the concave portions of the generally C-shaped ribs are generally opposite one another, and the nested ends of the first and second generally C-shaped ribs define the first and second openings therebetween.

7. The rotatable breather system of claim 6, wherein a median cross-sectional plane perpendicular to the first surface (144) cuts through a first end of the first rib, a first end of the second rib, the breather hole, a second end of the first rib and a second end of the second rib.

8. The rotatable breather system of any one of claims 1 to 7, wherein the one or more ribs (154) upstand from the first surface by a greater amount than the cap.

9. The rotatable breather system of any one of claims 6 to 8, wherein each generally C-shaped rib (154) comprises three or more subsections, the subsections being generally linear and arranged at obtuse angles 'c' to form a concave portion of the rib.

10. The rotatable breather system of claim 9, wherein each generally C-shaped rib (154) further comprises a first end portion radially more proximate to the breather hole, and a second end portion radially more distant from the breather hole, wherein the angle 'd' subtended between the first end portion and the adjacent generally linear subsection is greater than 180° and less than 360°, and the angle 'e' subtended between the second end portion and the adjacent generally linear subsection is greater than 90° and less than 180°.

11. The rotatable breather system of any one of claims 1 to 10, wherein the breather hole (134) or breather hole wall (150) fits imperfectly with the cap (146) thus allowing air flow and ventilation between the exterior and interior of the breather between the cap and the breather hole or breather hole wall.

12. The rotatable breather system of any one of claims 1 to 11, wherein one or more of the breather hole, the breather hole wall, or the breather hole cap contains grooves, channels, bores, or other suitable surface features which allow ventilation through the breather hole.

13. A vehicle lamp (110) comprising a light source (116), a lamp housing (118) with at least one translucent or transparent surface for transmitting light emitted by the light source, and the rotatable breather system of any one of claims 1 to 12.

14. A vehicle lamp according to claim 13, wherein the vehicle lamp (110) is mountable in two configurations.

15. A vehicle lamp (110) according to any one of claims 13 to 14 wherein the light source (116) is laterally displaced within the lamp housing (118) to one side of a median vertical plane of the lamp housing.

16. A rotatable vehicle lamp (110) comprising a light source, a lamp housing (118) with at least one translucent or transparent surface for transmitting light emitted by the light source, and a rotatable breather system, the rotatable breather system comprising:
- a breather hole (134) defining an aperture through a wall (138) of the lamp housing to allow air flow between the interior (140) and exterior (142) of the lamp housing, the wall having a first, external surface (144);
- a cap (146) mountable over the breather hole and comprising a covering surface, in use, to allow air flow through the breather hole and to substantially prevent flow of liquid from the exterior to the interior of the lamp housing; and
- a baffle (152) on the first surface of the lamp housing to direct liquid away from the breather hole, the baffle comprising one or more ribs (154) upstanding from the first surface of the lamp housing, the one or more upstanding ribs arranged radially out from the breather hole and defining a tortuous path with at least one wall to prevent direct flow of liquid towards the breather hole
**characterised in that** (a) the one or more ribs further define at least a first and second opening (158, 158') through the baffle and the first and second openings are arranged substantially on opposite sides of the breather hole in use to allow liquid to drain from the baffle under the influence of gravity through the first or second opening, depending upon the orientation of the breather system, and (b) the light source is laterally displaced within the lamp housing to one side of a median vertical plane of the lamp housing.

17. The rotatable vehicle lamp of claim 16 comprising the rotatable breather system of any one of claims 2 to 12.
